# EUROPÄISCHE PATENTSCHRIFT

(11) **EP 3 774 419 B1**
(45) Veröffentlichungstag und Bekanntmachung des Hinweises auf die Patenterteilung: **13.07.2022**
(21) Anmeldenummer: 19708956.8
(22) Anmeldetag: 18.02.2019
(51) Int. Cl.: B60J 7/00

(54) **FAHRZEUGDACH, UMFASSEND EINE ROLLOANORDNUNG MIT LAGEREINHEITEN FÜR ROLLOBAHN**
VEHICLE ROOF COMPRISING A ROLLER BLIND ASEMBLY WITH ROLLER BEARING SUPPORT UNITS.
TOIT DE VÉHICULE COMPRENANT UN ENSEMBLE DE VOLETS ROULANTS AVEC DES UNITÉS DE SUPPORT DE ROULEMENT À ROULEAUX.

(30) Priorität: 09.04.2018 DE 102018108354
(43) Veröffentlichungstag der Anmeldung: 17.02.2021
(73) Patentinhaber: Webasto SE, 82131 Stockdorf (DE)
(72) Erfinder: MUELLER, Mathias, 85221 Dachau (DE); TIRPITZ, Guenter, 86926 Greifenberg (DE)
(74) Vertreter: advotec.
(86) Internationale Anmeldenummer: PCT/EP2019/053959
(87) Internationale Veröffentlichungsnummer: WO 2019/197071

(56) Entgegenhaltungen:
- EP-A1- 2 327 576
- EP-A2- 0 237 759
- WO-A1-2013/034630
- DE-A1-102014 005 476
- DE-A1-102015 109 862
- JP-A- H04 348 920
- JP-U- S62 171 313
- US-A1- 2012 255 690

## Beschreibung

Die Erfindung betrifft ein Fahrzeugdach mit den Merkmalen des Oberbegriffs des Patentanspruchs 1.

Ein derartiges Fahrzeugdach ist aus der Druckschrift DE 10 2014 005 476 A1 bekannt. Dieses Fahrzeugdach umfasst zur Beschattung eines transparenten Dachabschnitts eine Rolloanordnung, die beidseits jeweils eine Lagereinheit aufweist, welche von oben an einem Dachrahmen fixiert ist, der eine Lagerschale für die Rolloeinheit bildet. Der Dachrahmen ist wiederum an einem dachfesten Trägerabschnitt des betreffenden Fahrzeugs fixiert. Die Montage des Dachrahmens an dem betreffenden Fahrzeug bzw. dem betreffenden Fahrzeugdach erfolgt zusammen mit der Rolloanordnung. Die Rolloanordnung muss also komplett vormontiert sein, bevor der Dachrahmen mit einem Fahrzeugrohbau verbunden wird. Da der Bauraum dann nicht mehr zugänglich wäre, kann die Rolloanordnung nicht nach der Montage des Daches an dem Fahrzeugrohbau montiert werden. Das Dokument EP 2 327 576 zeigt ebenfalls ein gattungsgemäßes Fahrzeugdach mit Rolloanordnung.

Der Erfindung liegt die Aufgabe zugrunde, ein Fahrzeugdach der einleitend genannten Gattung zu schaffen, bei dem die Rolloanordnung auch nachträglich, das heißt bei mit einem Karosserierohbau verbundenen Trägerabschnitt von unten montierbar ist und die Lagereinheiten dann in einfacher Weise gegenüber dem dachfesten Trägerabschnitt positioniert werden können.

Diese Aufgabe ist erfindungsgemäß durch das Fahrzeugdach mit den Merkmalen des Patentanspruchs 1 gelöst.

Das Fahrzeugdach nach der Erfindung umfasst also seitliche Lagereinheiten für die Rollobahn bzw. den Rollowickel, die jeweils zweigeteilt sind und einen fest mit der Lagerschale verbundenen Lagerbock und ein Rolloführungselement umfassen, das gegenüber dem Lagerbock beweglich ist bzw. schwimmend an diesem gelagert ist, bevor es positionsgenau an dem dachfesten Trägerabschnitt fixiert wird. Die Rolloeinheit ist über die seitlichen Lagereinheiten auf der Lagerschale befestigt. Die Lagerschale kann von unten an dem dachfesten Trägerabschnitt fixiert werden. Die Lagerschale, die als so genannte Rollowanne ausgebildet sein kann, stellt eine Montageplattform dar, die nach Art eines Moduls mit dem Fahrzeugdach verbindbar ist, und zwar auch, wenn das Fahrzeugdach schon an dem Fahrzeugrohbau fixiert ist. Damit lässt sich die Rolloanordnung modularisiert nachträglich und automatisierbar montieren. Dies ermöglicht es wiederum, die Rolloanordnung erst zu einem späteren Zeitpunkt an den jeweiligen Kundenwunsch anzupassen, beispielsweise hinsichtlich der Farbe der Rollobahn. Zudem kann die Rolloanordnung in einem Bereich des Fahrzeugdachs von unten an dieses herangeführt werden, welcher neben dem transparenten Dachabschnitt liegt. Damit wird durch die Rolloanordnung nicht der maximal zur Verfügung stehende Dachdurchsichtsbereich überdeckt. Die Lagerböcke der Lagereinheiten, über die die Rolloeinheit auf die Lagerschale aufgesetzt ist, dienen insbesondere zur Lagerung des Rollowickels. Eine Kopplung der Rolloeinheit an den Trägerabschnitt bzw. dachfeste Führungsschienen, die Bestandteil des dachfesten Trägerabschnitts sein können, erfolgt über die Rolloführungselemente der Lagereinheiten.

Unter der Montagestellung ist vorliegend die Stellung des Rolloführungselements zu verstehen, die dem fertig am Dach montierten Zustand entspricht. Die Vormontagestellung ist die Stellung des Rollo führungselements, die dieses beispielsweise bei einem Schritt zur Befestigung der Lagerschale einnimmt.

Die Lagereinheiten bzw. die Einzelteile der Lagereinheiten können jeweils als Kunststoff-Spritzgießteil ausgebildet sein. Die Lagerschale, die sich vorzugsweise in Dachquerrichtung erstreckt und ein Stanz-/Biege-Blechteil sein kann, ist insbesondere einstückig ausgebildet.

Bei einer bevorzugten Ausführungsform des Fahrzeugdachs nach der Erfindung stehen die Rolloführungselemente jeweils in Ausziehrichtung der Rollobahn über einen Rand der Lagerschale vor. Damit können die Rolloführungselemente vor ihrer Fixierung an dem dachfesten Trägerabschnitt gegenüber den Lagerböcken verschoben werden, wenn die Lagerschale schon an dem dachfesten Trägerabschnitt fixiert ist, da sie von einem Werker von unten erreichbar sind.

Zur Fixierung der Rolloführungselemente an dem dachfesten Trägerabschnitt sind diese vorzugsweise jeweils mit einem Schraubenloch versehen, das an einer in Ausziehrichtung der Rollobahn angeordneten Seite offen ist und über das das jeweilige Rolloführungselement mit dem dachfesten Trägerabschnitt verschraubt ist. Bei fixierter Lagerschale kann damit das Rolloführungselement gegenüber dem betreffenden Lagerbock so verschoben werden, dass das Schraubenloch nach Art einer Gabel über eine vormontierte Schraube geschoben wird, über die dann das Rolloführungselement an dem dachfesten Trägerabschnitt fixiert wird.

Um die Verlagerung der Rolloführungselemente gegenüber den Lagerböcken zu erleichtern, können die Rollo führungselemente an ihrer Unterseite jeweils eine Griffmulde aufweisen.

Bei der Rolloanordnung des Fahrzeugdachs nach der Erfindung handelt es sich vorzugsweise um ein seitengeführtes Rollo. Bei einer bevorzugten Ausführungsform weisen daher die Rollo führungselemente jeweils eine Zentrierbahn auf, in der ein seitliches Führungsband der Rollobahn geführt ist und die mit einem Kanal eines Führungsschienenprofils fluchtet, das Bestandteil des dachfesten Trägerabschnitts ist. Die Rolloführungselemente sind damit zumindest im weitesten Sinne als Fortsetzungen der Führungsschienenprofile ausgebildet.

In der Regel ist die Rollobahn der Rolloanordnung mit einem Zugspriegel versehen, der an seinen beiden seitlichen Enden jeweils einen Zugspriegelgleiter aufweist. Vorzugsweise weisen daher die Rollo führungselemente jeweils auch eine Führungsbahn für jeweils einen Zugspriegelgleiter auf, welche mit einem Führungskanal eines Führungsschienenprofils fluchtet, das Bestandteil des Trägerabschnitts ist. Diese Führungsbahn kann die Führungsbahn umfassen, in der ein seitliches Führungsband der Rollobahn geführt ist.

Um die Zugspriegelgleiter in einem Vormontagezustand, das heißt beim Montieren der Rolloanordnung bzw. dessen Lagerschale an dem dachfesten Trägerabschnitt die Zugspriegelgleiter verliersicher zu halten, weisen die Rolloführungsabschnitte vorzugsweise jeweils eine Rastnase oder Rastmulde auf, die den betreffenden Zugspriegelgleiter in dem Vormontagezustand an dem jeweiligen Rolloführungselement sichert und mit einem Rastgegenelement des jeweiligen Zugspriegelgleiters zusammenwirkt.

Um Toleranzen in mehrere Raumrichtungen ausgleichen zu können, sind die Rolloführungselemente bei einer speziellen Ausführungsform des Fahrzeugdachs nach der Erfindung jeweils mit Spiel in mindestens zwei Raumrichtungen schwimmend in dem jeweiligen Lagerbock gelagert. Beispielsweise können die Rolloführungselemente vor ihrer Fixierung an dem dachfesten Trägerabschnitt in Ausziehrichtung der Rollobahn aus den Lagerböcken gezogen und in Dachquerrichtung versetzt werden.

Beim Transport der Rolloanordnung, das heißt vor der Montage der Rolloanordnung an dem dachfesten Trägerabschnitt ist es zweckmäßig, dass sämtliche Elemente der Rolloanordnung verliersicher gehalten sind. Aus diesem Grunde ist bei einer speziellen Ausführungsform des Fahrzeugdachs nach der Erfindung für die Rolloführungselemente jeweils eine Rasteinrichtung vorgesehen, die diese in einem Vormontagezustand an dem jeweiligen Lagerbock sichert. Die Rasteinrichtung kann Rastnasen und/oder Rastmulden umfassen.

Bei der Montage der Rolloanordnung an dem Trägerabschnitt ist es vorteilhaft, wenn schon beim Heranfahren eine möglichst präzise Vorpositionierung der Rolloführungselemente gegenüber dem Trägerabschnitt erreicht wird. Dies wird beispielsweise so realisiert, dass die Rollo führungselemente jeweils einen Positioniervorsprung aufweisen, der von unten in eine korrespondierende Aufnahme des Trägerabschnitts eingreift und der insbesondere als Zentrierrippe ausgebildet ist, die sich in Ausziehrichtung der Rollobahn erstreckt.

Der Positioniervorsprung kann zudem mit mindestens einer Einführschräge versehen sein, die ein Verklemmen des Rolloführungselements beim Einfahren in den Trägerabschnitt verhindert.

Zudem ist es vorteilhaft, wenn die Rolloführungselemente jeweils mindestens einen stirnseitigen Zentrierzapfen umfassen, der in eine dachfeste Zentrierausnehmung eingreift. Mit dem Zentrierzapfen kann eine präzise Montagelage des betreffenden Rolloführungselements gegenüber dem dachfesten Trägerabschnitt in Dachhochrichtung und/oder Dachquerrichtung erreicht werden. Die Zentrierausnehmung ist insbesondere von einem Kanal eines Führungsschienenprofils gebildet, an dem das betreffende Rolloführungselement in einer Montagestellung mit einer Stirnfläche anliegt. Die Stirnfläche bildet einen Anschlag für das Rolloführungselement, wodurch eine exakte Positionierung des betreffenden Rolloführungselements bzw. der Rolloeinheit in Ausziehrichtung der Rollobahn gewährleistet ist.

Um die Zugspriegelgleiter über einen Antriebsmotor antreiben zu können, weisen diese jeweils vorzugsweise eine Aufnahme für ein Koppelelement eines jeweiligen Antriebskabels auf, das von dem Antriebsmotor angetrieben ist.

Um bei der von unten erfolgenden Montage der Rolloanordnung und bei dem dachfesten Trägerabschnitt vormontierten Antriebskabeln eine selbsttätige Kopplung zwischen den Zugspriegelgleitern und den Antriebskabeln zu erreichen, sind die Aufnahmen der Zugspriegelgleiter vorzugsweise nach oben offen, wobei sie die Koppelelemente zumindest in Längsrichtung des betreffenden Führungsschienenprofils spielfrei aufnehmen.

Die Kopplung zwischen den Koppelelementen und den Zugspriegelgleitern wird erleichtert, wenn die Aufnahmen und/oder die Koppelelemente jeweils Einführschrägen haben.

Bei einer speziellen Ausführungsform des Fahrzeugdachs nach der Erfindung sind die Koppelelemente der Antriebskabel jeweils hakenförmig ausgebildet und mit einer Zunge versehen, die parallel zu der vertikalen Dachlängsmittelebene ausgerichtet ist.

Die Lagereinheiten dienen vorzugsweise nicht nur zur Stoffzentrierung, das heißt zur Zentrierung der Rollobahn in Dachquerrichtung, sondern auch zur Lagerung des Rollowickels. Insbesondere können die Lagerböcke der Lagereinheiten jeweils einen Lagerzapfen für ein Wickelrohr, beispielsweise für eine mittels einer Wickelfeder vorgespannte Wickelwelle umfassen. Die Rolloeinheit kann aber auch wickelrohrfrei ausgebildet sein, wobei dann die seitlichen Führungsbänder vorzugsweise jeweils als Rollfeder ausgebildet sind und außerhalb der Führungsschienen ein Aufwickeln der Rollobahn bewirken.

Zur Erleichterung der Montage der Rolloanordnung an dem dachfesten Trägerabschnitt ist die Lagerschale vorzugsweise mit mindestens einem Montageclip versehen, der diese in einer Vormontage an dem Trägerabschnitt hält und der vorzugsweise einen zumindest angenähert rechteckigen Querschnitt hat. Die Lagerschale kann über den Montageclip in einfacher Weise an dem Trägerabschnitt aufgehängt werden. Anschließend kann die Lagerschale über Schrauben oder sonstige Fixiermittel an dem dachfesten Trägerabschnitt gesichert werden bzw. weiter an den dachfesten Trägerabschnitt gezogen werden. Bei einer manuellen Montage der Rolloanordnung an den Trägerabschnitt wird durch den Montageclip den Werkern ermöglicht, ihre Hände frei zu bewegen.

Vorzugsweise ist der Montageclip, der durch seine insbesondere rechteckige Form ein Verdrehen der Rolloanordnung gegenüber dem Trägerabschnitt in der Vormontagestellung verhindert, ein separates Bauteil, das mittels erster Rastlaschen in einer Ausnehmung der Lagerschale verrastet ist. Vor der Montage der Rolloanordnung an dem Trägerabschnitt wird die Lagerschale mit dem mindestens einen Montageclip versehen.

Der Montageclip ist bei einer speziellen Ausführungsform des Fahrzeugdachs nach der Erfindung so ausgebildet, dass er in der Vormontagestellung mittels zweiter Rastlaschen in einer Montageausnehmung des Trägerabschnitts mit Spiel in Dachhochrichtung von unten verrastet. Der Abstand zwischen der Lagerschale und dem Trägerabschnitt ist in der Vormontagestellung vorzugsweise so gewählt, dass Fixierschrauben, mit denen die Lagerschale versehen ist, so in Gewinde eingreifen, dass eine Betätigung der Fixierschrauben dazu führt, dass diese direkt in Gewinde greifen und die Lagerschale so gegen den dachfesten Trägerabschnitt ziehen. Der Abstand zwischen dem Trägerabschnitt und der Lagerschale in der Vormontagestellung korrespondiert mit dem Spiel in Dachhochrichtung, das durch den Montageclip vorgegeben wird.

Um eine positionsgenaue Montage der Lagerschale bzw. der Rolloanordnung an dem dachfesten Trägerabschnitt zu erleichtern, weist die Lagerschale bei einer bevorzugten Ausführungsform des Fahrzeugdachs nach der Erfindung mindestens einen Zentrierstift, vorzugsweise bezogen auf eine vertikale Dachlängsmittelebene beidseits jeweils mindestens einen Zentrierstift auf, der von unten in eine korrespondierende Zentrierausnehmung des dachfesten Trägerabschnitts eingreift und so die Rolloanordnung während der Montage an dem Trägerabschnitt ausrichtet.

Um die Steifigkeit des betreffenden Fahrzeugs im Dachbereich zu erhöhen, kann die Lagerschale bezogen auf die vertikale Dachlängsmittelebene beidseits jeweils mit einem Fixierblech versehen sein, über das sie karosseriefest fixierbar ist. Beispielsweise werden die Fixierbleche im montierten Zustand mit B-Säulen des betreffenden Fahrzeugs verbunden. Die Fixierbleche stellen so genannte Crash-Bleche dar.

Der Trägerabschnitt, an dem die Rolloanordnung bzw. die Lagerschale der Rolloanordnung in Einbaulage befestigt ist, kann von einem Rahmen eines Dachöffhungssystems gebildet sein. Der Rahmen kann Führungsschienen bzw. Führungsschienenprofile aufweisen, an welchen die Rollobahn der Rolloanordnung über seitliche Führungsbänder geführt ist.

Die Lagerschale der Rolloanordnung kann eine Ablaufkante für die Rollobahn bilden und so eine Wölbung eines ausgezogenen Bereichs der Rollobahn vorgeben.

Bei einem Fahrzeugdach mit zwei transparenten Dachabschnitten kann die Rolloanordnung zwei Rolloeinheiten umfassen, die auf der Lagerschale angeordnet sind und die gegensinnig ausziehbar sind.

Die Erfindung hat auch ein Fahrzeugdach zum Gegenstand, das mindestens einen transparenten Dachabschnitt, einen dachfesten Trägerabschnitt und eine Rolloanordnung zur wahlweisen Abschattung oder zumindest teilweisen Freigabe des transparenten Dachabschnitts umfasst, die mindestens eine Rolloeinheit aufweist, die eine Rollobahn, die zu einem Rollowickel aufwickelbar ist, und bezogen auf eine vertikale Dachlängsmittelebene beidseits jeweils eine seitliche Lagereinheit umfasst. Der Rollowickel ist zwischen den beiden seitlichen Lagereinheiten angeordnet. Die Rolloanordnung umfasst eine Lagerschale, auf der die mindestens eine Rolloeinheit über die seitlichen Lagereinheiten befestigt ist und die von unten an dem mindestens einen Trägerabschnitt fixiert ist. Die Lagerschale, die sich insbesondere in Dachquerrichtung erstreckt und einstückig ausgebildet ist, ist mit mindestens einem Montageclip versehen, der sie in einer Vormontagestellung an dem Trägerabschnitt hält und der vorzugsweise einen eckigen, insbesondere zumindest angenähert rechteckigen Querschnitt hat.

Es versteht sich, dass dieses Fahrzeugdach, das mit einer montagefreundlichen, von unten montierbaren Rolloanordnung versehen ist, sämtliche oben beschriebenen Merkmale jeweils separat oder in beliebiger Kombination aufweisen kann.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines Fahrzeugdachs nach der Erfindung ist in der Zeichnung schematisch vereinfacht dargestellt und wird in der nachfolgenden Beschreibung näher erläutert. Es zeigt:

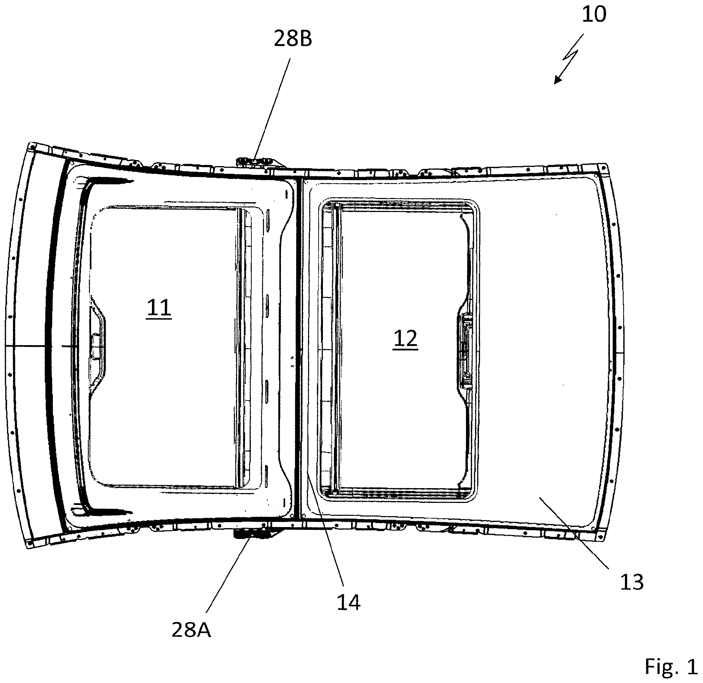

- Figur 1: eine Draufsicht auf ein Fahrzeugdach nach der Erfindung:

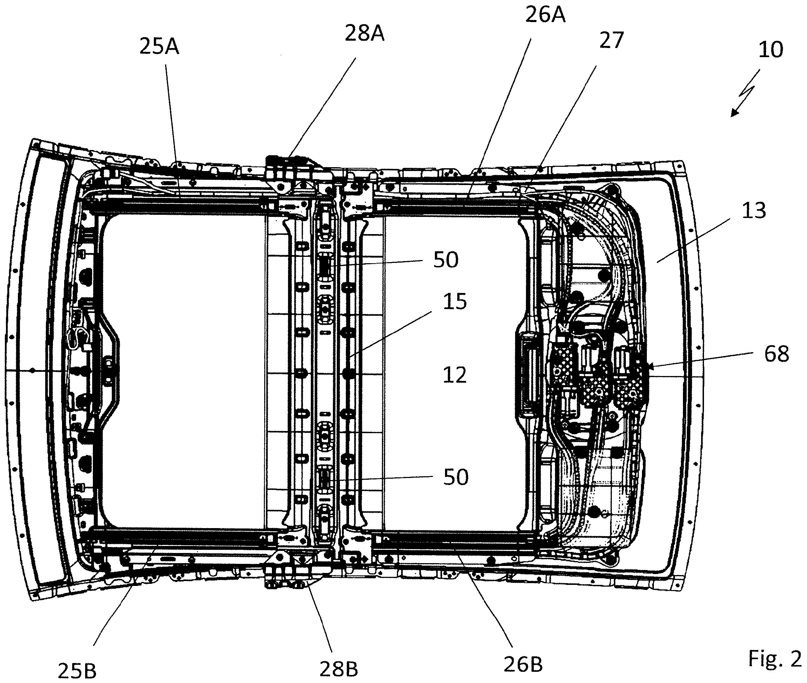

- Figur 2: eine Unteransicht des Fahrzeugdachs;

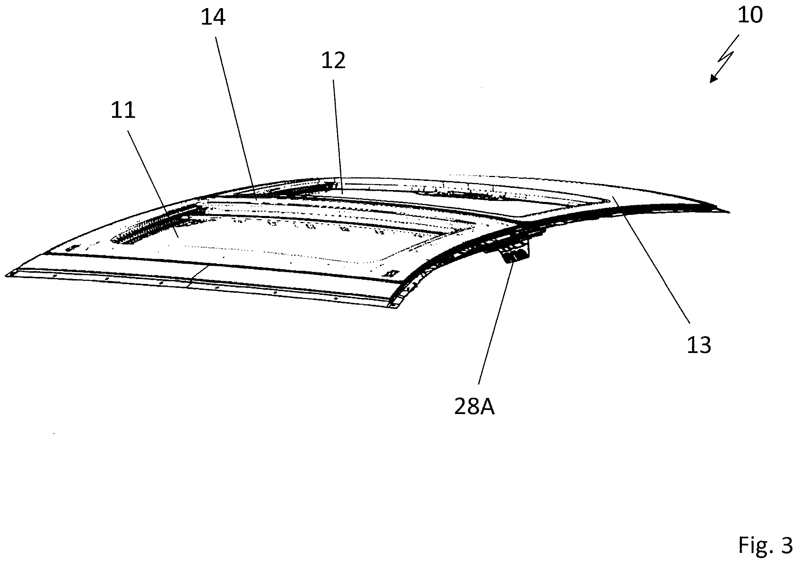

- Figur 3: eine perspektivische Draufsicht des Fahrzeugdachs;

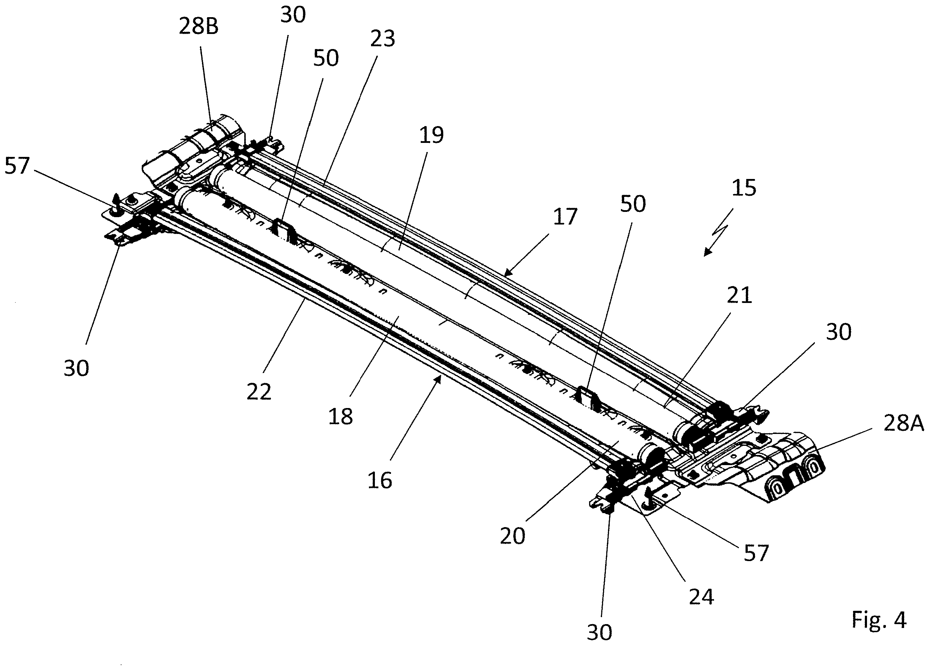

- Figur 4: eine Rolloanordnung des Fahrzeugdachs in einer perspektivischen Draufsicht;

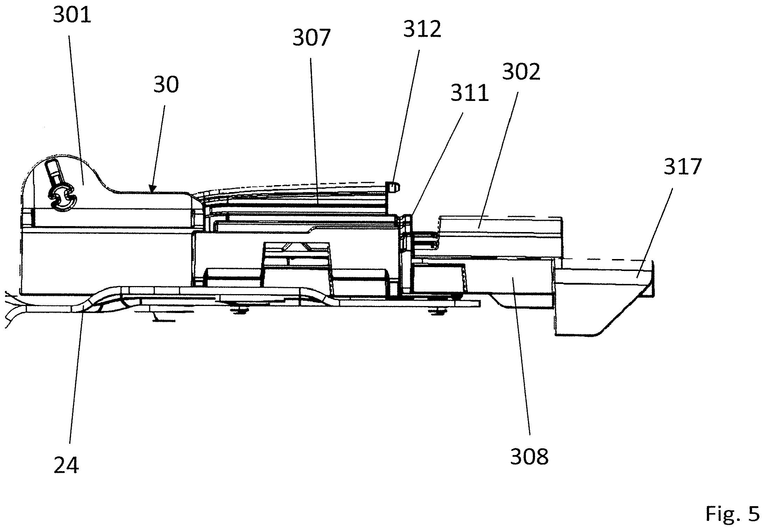

- Figur 5: eine Seitenansicht einer Lagerschale der Rolloanordnung mit einer Lagereinheit für eine Rollobahn;
- Figur 6: eine perspektivische Draufsicht der Lagereinheit;
- Figur 7: eine perspektivische Unteransicht der Lagereinheit;
- Figur 8: eine Explosionsdarstellung der Lagereinheit;

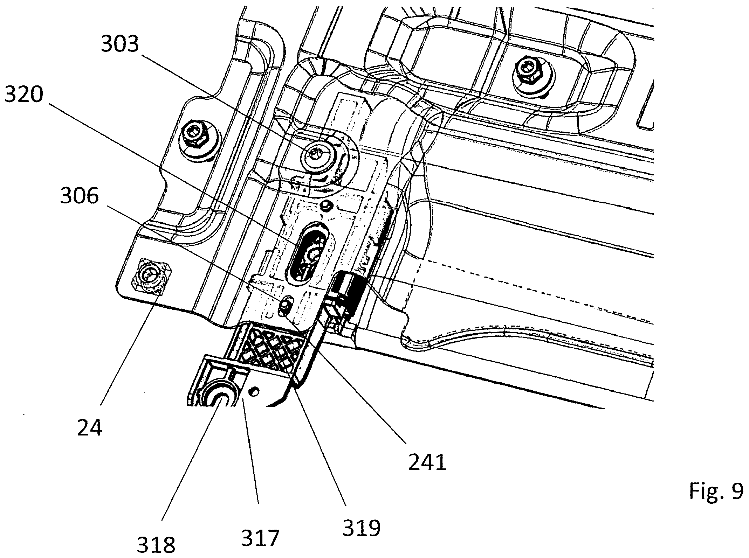

- Figur 9: eine perspektivische ausschnittsweise Unteransicht der Lagerschale mit einer Lagereinheit;
- Figur 10: eine perspektivische Darstellung durch die Lagerschale und einen Montageclip;
- Figur 11: eine perspektivische Draufsicht auf die Lagerschale im Bereich des Montageclips;
- Figur 12: eine perspektivische Unteransicht der Lagerschale im Bereich des Montageclips;
- Figur 13a,: b eine Vormontage der Rolloanordnung an einem dachfesten Trägerabschnitt;
- Figur 14a, b: eine Kopplung eines Antriebskabels mit einem Zugspriegelgleiter der Rolloanordnung bei der Montage der Rolloanordnung;
- Figur 15a, b: die Kopplung gemäß Figur 14a, b in einem Längsschnitt durch die Rolloanordnung;
- Figur 16a, b: eine Positionierung einer der Lagereinheiten der Rolloanordnung bezüglich einer Führungsschiene bei der Montage der Rolloanordnung;
- Figur 17a, b: eine Fixierung eines Rolloführungsabschnitts der Lagereinheiten an einer Führungsschiene; und
- Figur 18: eine perspektivische Seitenansicht eines Zugspriegelgleiters der Rolloanordnung.

In der Zeichnung ist ein Fahrzeugdach 10 dargestellt, das ein Panoramadach eines Personenkraftwagens ist und einen vorderen bzw. bugseitigen transparenten Dachabschnitt 11 und einen hinteren bzw. heckseitigen transparenten Dachabschnitt 12 aufweist. Der vordere transparente Dachabschnitt 11 ist von einem verstellbaren Deckelelement eines Schiebedachsystems gebildet. Die transparenten Dachabschnitte 11 und 12 sind von einem blickdichten Festdachabschnitt 13 umrahmt und durch einen sich in Fahrzeugquerrichtung erstreckenden ebenfalls blickdichten Festdachabschnitt 14 voneinander getrennt.

Zum wahlweisen Abschatten oder zumindest teilweisen Freigeben der transparenten Dachabschnitte 11 und 12 weist das Fahrzeugdach 10 eine Rollo anordnung 15 auf, die zwei Rolloeinheiten 16 und 17 umfasst, von denen die Rolloeinheit 16 zur Abschattung des vorderen transparenten Dachabschnitts 11 und die Rolloeinheit 17 zum Abschatten des hinteren transparenten Dachabschnitts 12 dient. Hierzu weist die Rolloeinheit 16 eine Rollobahn 18 und die Rolloeinheit 17 eine Rollobahn 19 auf. Die beiden Rollobahnen 18 und 19 sind jeweils aus einem blickdichten, wickelbaren Stoff gebildet und in dem unterhalb des Festdachabschnitts 14 angeordneten, sich in Dachquerrichtung erstreckenden Bereich zu einem Rollowickel 20 bzw. 21 aufwickelbar. Zur Betätigung, das heißt zum Ausziehen oder Aufwickeln der Rollobahn 18 und 19 weisen die Rolloeinheiten 16 und 17 jeweils einen Zugspriegel 22 bzw. 23 auf, der an der jeweiligen Rollobahn 18 bzw. 19 an einem dem Rollowickel 20 bzw. 21 abgewandten Rand angeordnet ist.

Die Rolloeinheiten 16 und 17 sind im vorliegenden Fall gleichartig ausgebildet, weswegen die nachfolgende Beschreibung im Wesentlichen nur anhand der dem vorderen transparenten Dachabschnitt 11 zugeordneten Rolloeinheit 16 erfolgt.

Die Rolloanordnung 15 umfasst eine Lagerschale 24, welche von unten an einen Dachrahmen 27 angebunden ist, der einen dachfesten Trägerabschnitt darstellt und ein Paar vorderer Führungsschienen bzw. Führungsschienenprofile 25A und 25B, die entlang seitlicher Ränder des vorderen transparenten Dachabschnitts 11 angeordnet sind, und ein Paar hinterer Führungsschienen bzw. Führungsschienenprofile 26A bzw. 26B umfasst, die entlang seitlicher Ränder des hinteren transparenten Dachabschnitts 12 angeordnet sind. Die Lagerschale 24 bildet eine Tragplatte bzw. eine Rollowanne für die Rolloeinheiten 16 und 17 und erstreckt sich unterhalb des Festdachabschnitts 14 in Dachquerrichtung. Zudem ist die Lagerschale 24 an ihren bezogen auf die vertikale Dachlängsmittelebene beidseits angeordneten Rändern jeweils mit einem Fixierblech 28A bzw. 28B versehen, das mit einer jeweiligen B-Säule des betreffenden Fahrzeugaufbaus verschraubt werden kann. Ferner bildet die Lagerschale 24 an ihren in Dachquerrichtung verlaufenden Rändern Ablaufkanten für die Rollobahnen 18 und 19.

Die Rolloeinheiten 16 und 17 umfassen jeweils bezogen auf die vertikale Dachlängsmittelebene spiegelsymmetrisch zueinander ausgebildete Lagereinheiten 30, über die die jeweilige Rolloeinheit 16 bzw. 17 einerseits auf der Lagerschale 24 montiert ist und andererseits an die jeweiligen Führungsschienen 25A und 25B bzw. 26A und 26B angebunden ist. Zudem weisen die Rollo einheiten 16 und 17 jeweils eine nicht näher dargestellte Wickelwelle auf, die zwischen den jeweiligen Lagereinheiten 30 drehbar gelagert ist und ein mittels einer nicht näher dargestellten Wickelfeder in Aufwickelrichtung der jeweiligen Rollobahn 18 bzw. 19 vorgespanntes Wickelrohr hat. Zur Lagerung der Wickelwelle weisen die Lagereinheiten 30 jeweils einen Lagerzapfen 32 auf, der an der dem jeweiligen Rollowickel 20 bzw. 21 zugewandten Innenseite der jeweiligen Lagereinheit 30 ausgebildet ist.

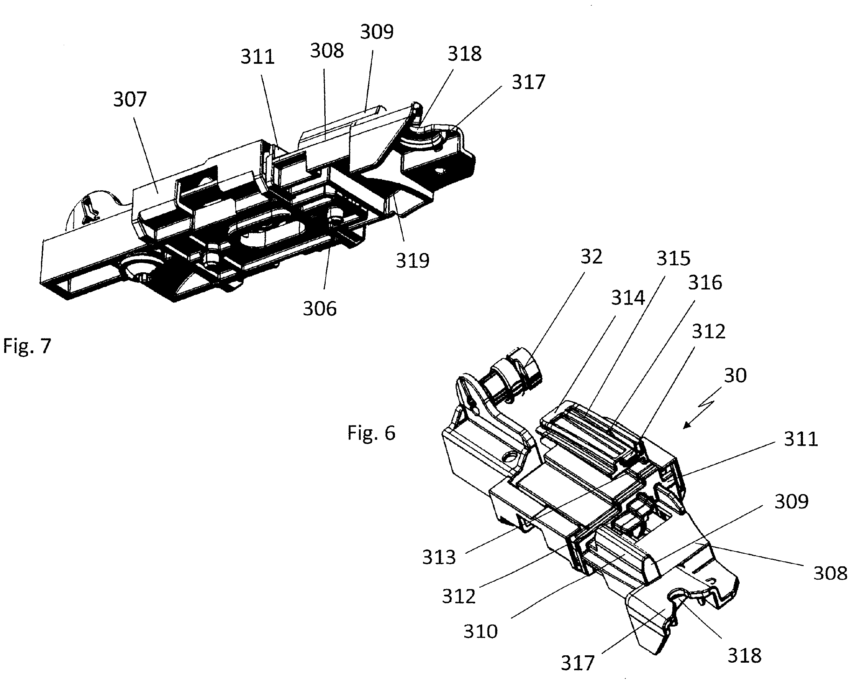

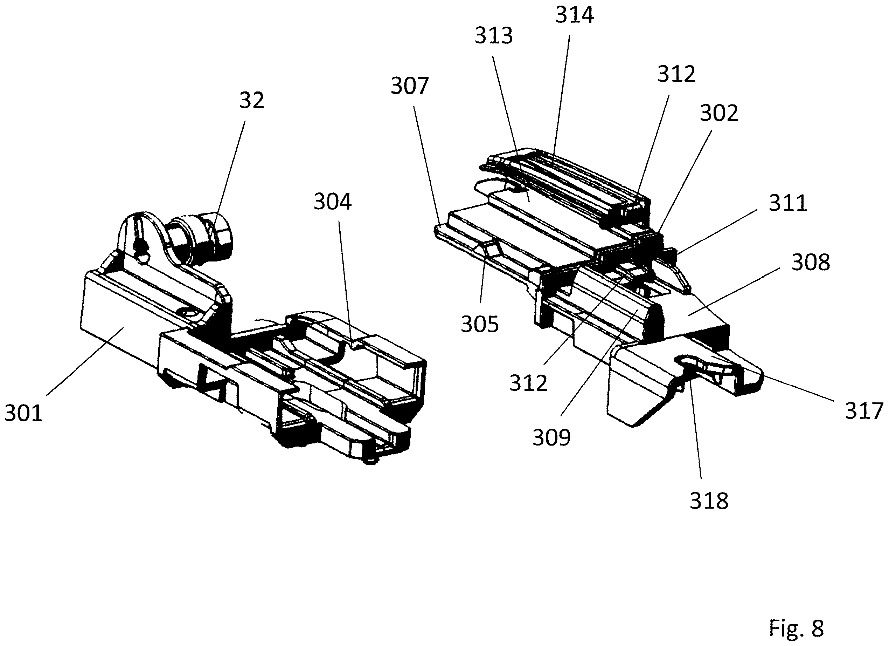

Die Lagereinheiten 30, von denen eine in den Figuren 6 bis 8 in Alleinstellung dargestellt ist, sind jeweils zweiteilig ausgebildet und umfassen einen Lagerbock 301 und ein Rolloführungselement 302. Der Lagerbock 301 ist mittels einer Fixierschraube 303, die von unten eingreift, an der Oberseite der Lagerschale 24 befestigt. Das Rolloführungselement 302 ist nach Art einer Schublade bezogen auf die Ausziehrichtung der jeweiligen Rollobahn von vorne in den Lagerbock 301 eingeschoben und in einer Vormontagestellung mittels Rastnasen 304 und 305 an dem jeweiligen Lagerbock 301 gesichert.

Zur exakten Positionierung des Lagerbocks 301 auf der Lagerschale 24 weist der Lagerbock 301 an seiner Unterseite einen Stift 306 auf, welcher in einen Schlitz 241 der Lagerschale 24 eingreift.

Das Rolloführungselement 302, das sowohl in Dachhochrichtung und Dachquerrichtung als auch in Dachlängsrichtung beweglich in dem jeweiligen Lagerbock 301 gelagert ist, weist einen Führungsabschnitt 307, der in den Lagerbock 301 eingeschoben ist, und einen vorderen Zentrierabschnitt 308 auf, mittels dessen das Rolloführungselement 302 exakt gegenüber dem Dachrahmen 27 bzw. der jeweiligen Führungsschiene 25A, 25B, 26A oder 26B positioniert werden kann.

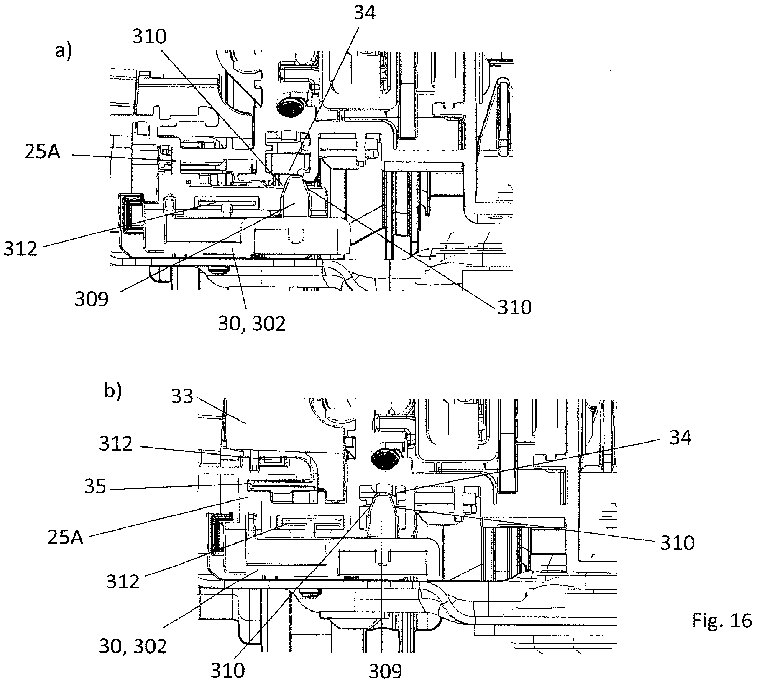

Der Zentrierabschnitt 308 weist an seiner Oberseite eine einen Positioniervorsprung darstellende Zentrierrippe 309 auf, die, wie den Figuren 16a und 16b zu entnehmen ist, von unten in einen Kanal 34 der jeweiligen Führungsschiene eingreift, der eine Aufnahme des Trägerabschnitts bildet. Um das Eintauchen der Zentrierrippe 309 in den Kanal 34 zu erleichtern, hat sie beidseits jeweils eine als Einführschräge 310 ausgestellte Flanke. Die Zentrierrippe 309 ermöglicht eine exakte Positionierung des Rolloführungselements 302 gegenüber der jeweiligen Führungsschiene 25A, 25B, 26A bzw. 26B in Dachquerrichtung.

Des Weiteren weist der Führungsabschnitt 307 eine Stirnfläche 311 auf, welche in der Montagestellung bündig an einer Stirnseite der betreffenden Führungsschiene 25A, 25B, 26A bzw. 26B anliegt. Um eine exakte Positionierung des eine Stoffzentrierung bereitstellendes Rolloführungselements 302, in Dachhochrichtung zu erreichen, sind im Bereich der Stirnfläche 311 des Weiteren Zentrierzapfen 312 ausgebildet, die in Kanäle des jeweiligen Führungsschienenprofils 25A, 25B, 26A bzw. 26B eingreifen, welche jeweils eine dachfeste Zentrierausnehmung bilden.

An dem Führungsabschnitt 307 des Rolloführungselements 302 ist eine Führungsbahn 313 ausgebildet, welche mit einem Kanal 35 der jeweiligen Führungsschiene 25A, 25B, 26A bzw. 26B fluchtet und in der ein jeweiliges seitliches Führungsband der jeweiligen Rollobahn 18 bzw. 19 geführt ist. Die Führungsbahn 313 ist oben von einem Steg 314 begrenzt, an dessen Oberseite eine Nut 315 ausgebildet ist, welche von einer Rastnase 316 unterbrochen ist, mittels der ein Zugspriegelgleiter 33 in einem Vormontagezustand an dem Rolloführungselement 302 der jeweiligen Lagereinheit 30 gesichert werden kann.

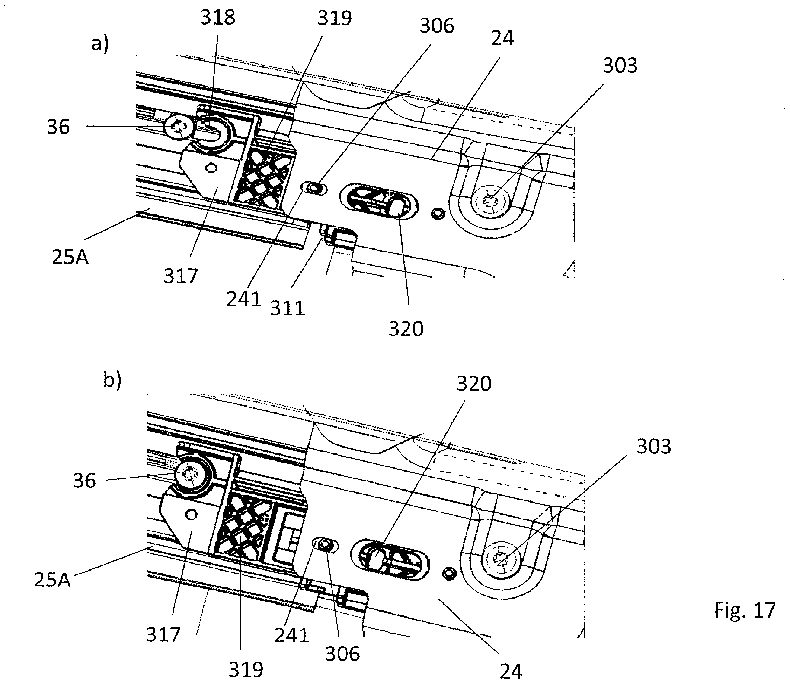

Die Rolloführungselemente 302 der Lagereinheiten 30 weisen des Weiteren an ihren vorderen, dem jeweiligen Lagerbock 301 abgewandten Ende eine Fixierlasche 317 auf, welche mit einem Schraubenloch 318 versehen ist, das an der in der Ausziehrichtung der jeweiligen Rollobahn 18 bzw. 19 angeordneten Seite, das heißt an der Stirnseite des jeweiligen Rollo führungselements 302 offen ist und über das das jeweilige Rollo führungselement 302 an einer jeweiligen Führungsschiene 25A, 25B, 26A bzw. 26B mittels einer Fixierschraube 36 verschraubt ist (vgl. Figur 17).

Zudem weisen die Rollo führungselemente 302 an ihrer Unterseite jeweils eine Griffmulde 319 auf.

Wie insbesondere den Figuren 17a und 17b zu entnehmen ist, stehen die Rolloführungselemente 302 jeweils in Ausziehrichtung der betreffenden Rollobahn 18 bzw. 19 über einen Rand der Lagerschale 24 über, so dass die Griffmulde 319 für einen Werker von unten greifbar ist, so dass er die Rolloführungselemente 302 gegenüber den Lagerböcken 301 so in Richtung der Fixierschrauben 36 verschieben kann, dass die Schraubenlöcher 318 die Fixierschrauben 36 gabelartig umgreifen und die Stirnflächen 311 an den korrespondierenden Stirnseiten der betreffenden Führungsschienen 25A, 25B, 26A bzw. 26B anschlagen. Die Zentrierzapfen 312 greifen dann in entsprechende Kanäle der Führungsschienen ein.

Die Rolloeinheiten 16 und 17 sind jeweils mittels eines Antriebsmotors einer Antriebsmotoreinheit 68 angetrieben, die unterhalb eines heckseitigen Bereichs des blickdichten Festdachabschnitts 13 angeordnet ist und die Antriebskabel 39 antreibt, die jeweils über ein Koppelelement 70 mit einem jeweiligen Zugspriegelgleiter 33 gekoppelt sind.

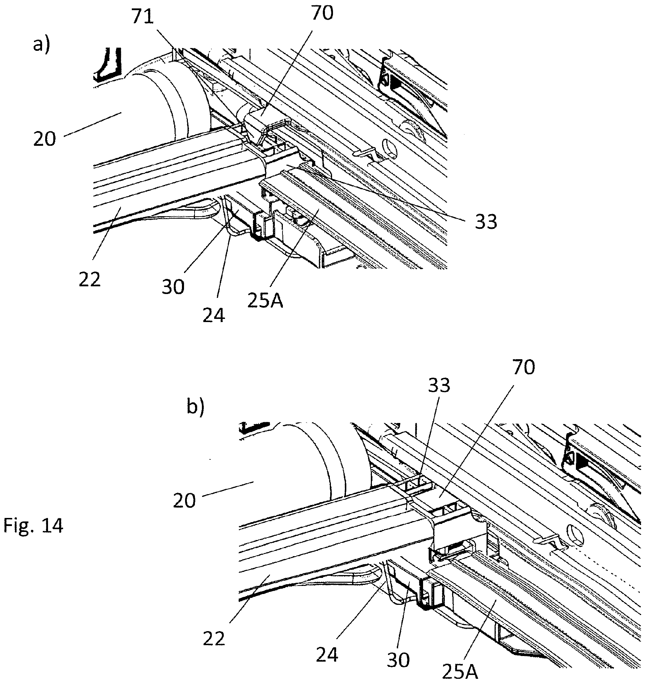

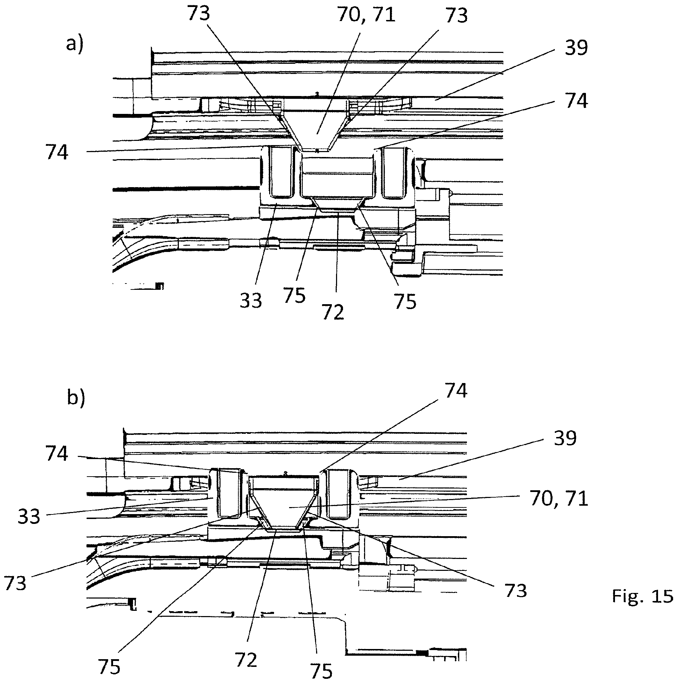

Wie insbesondere den Figuren 14 und 15 zu entnehmen ist, sind die Koppelelemente 70 der Antriebskabel 39 im Querschnitt hakenförmig ausgebildet, so dass sie jeweils eine Zunge 71 aufweisen, die parallel zu der vertikalen Dachlängsmittelebene ausgerichtet ist und in eine Aufnahme 72 eingreift, die in dem jeweiligen Zugspriegelgleiter 33 ausgebildet ist.

Wie ebenfalls den Figuren 14 und 15 zu entnehmen ist, taucht die Zunge 71 beim Heranfahren der modulartigen Rolloanordnung 15 an den Dachrahmen 27 von oben in die Aufnahme 72 des Zugspriegelgleiters 33 ein. Um Toleranzen hinsichtlich der Positionierung ausgleichen zu können, weist die Zunge 71 Flanken 73 auf, die als Einführschrägen ausgebildet sind und die mit Einführschrägen 74 und 75 der Aufnahme 72 des Zugspriegelgleiters 33 zusammenwirken, so dass die Zunge 70 positionsgenau und spielfrei in diese geführt wird.

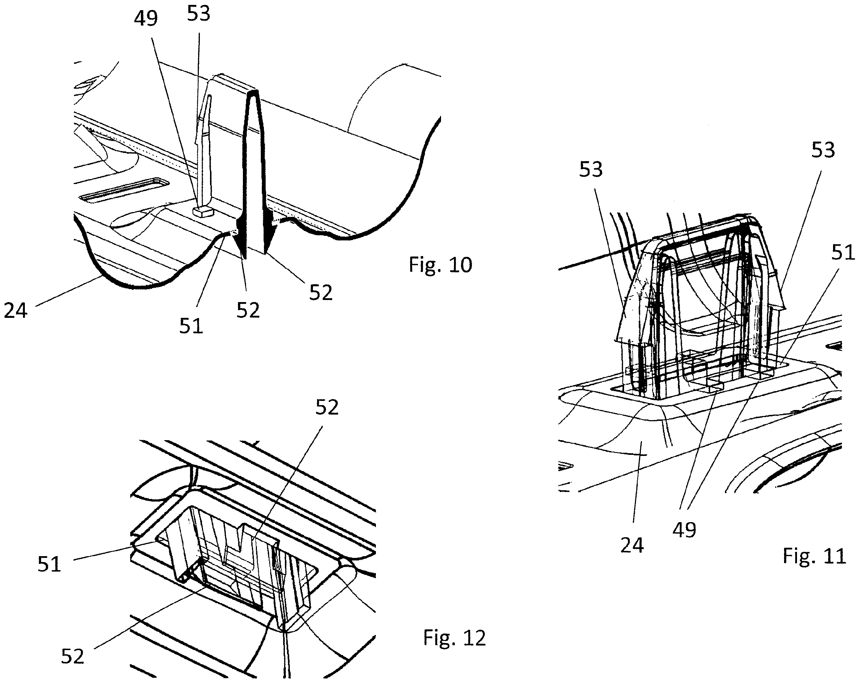

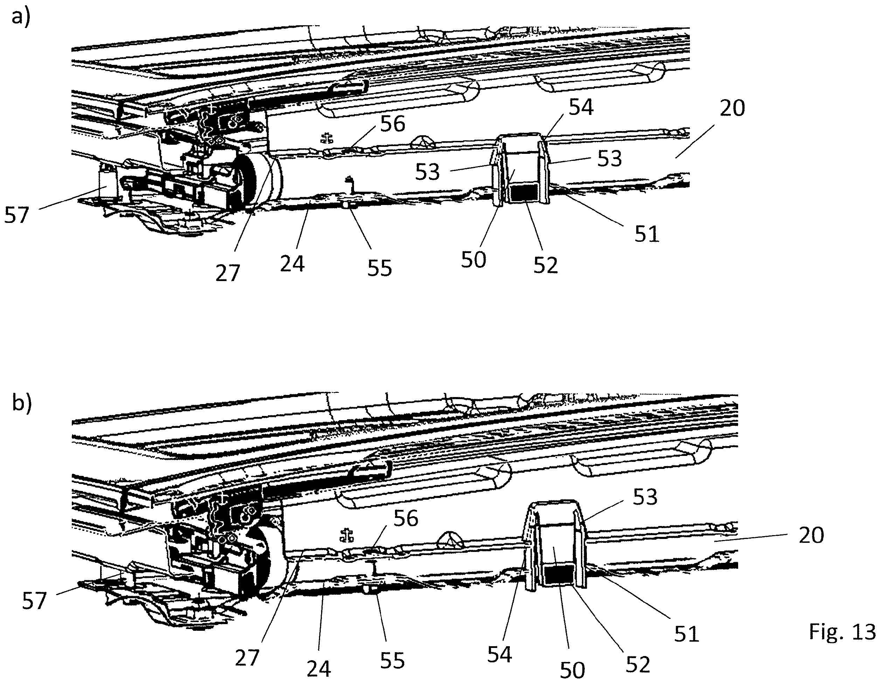

Die Lagerschale 24 der Rolloanordnung 15 ist in dem Bereich zwischen den beiden Rolloeinheiten 16 und 17 mit zwei Montageclips 50 versehen, die, wie den Figuren 10 bis 13 zu entnehmen ist, jeweils in einer rechteckigen Ausnehmung 51 der Lagerschale 24 verrastet sind und einen im Wesentlichen rechteckigen Querschnitt hat. An der Unterseite haben die Montageclips 50 jeweils erste Rastlaschen 52, die die Lagerschale 24 hintergreifen. Um die Montageclips 50 an der Lagerschale in Position zu halten, sind Anschläge 53 ausgebildet, die in Querrichtung vorstehen und an der Oberseite der Lagerschale 24 anliegen. Zudem weisen die Montageclips 50 an ihren beidseitigen Flanken zweite Rastlaschen 53 auf, die gegenüber den ersten Rastlaschen 52 um 90° versetzt sind und über die die Montageclips 50 in einer Vormontagestellung (vgl. Fig. 13b) an dem Dachrahmen 27 von unten verrastet werden können. Hierbei durchgreifen die Montageclips 50, die also jeweils vier Rastlaschen aufweisen, jeweils eine Montageausnehmung 54 des Dachrahmens 27. In dieser Vormontagestellung greifen Fixierschrauben 55 mit ihren freien Stirnseiten in Gewinde 56 ein, die an dem Dachrahmen 27 zur Fixierung der Rolloanordnung 15 ausgebildet sind.

Des Weiteren sind an der Lagerschale 24 oberseitig in Dachhochrichtung weisende Zentrierstifte 57 angeordnet, die in der in Figur 13b dargestellten Vormontagestellung und auch in ihrer Endstellung in korrespondierende Zentrierausnehmungen des Dachrahmens 27 eingreifen.

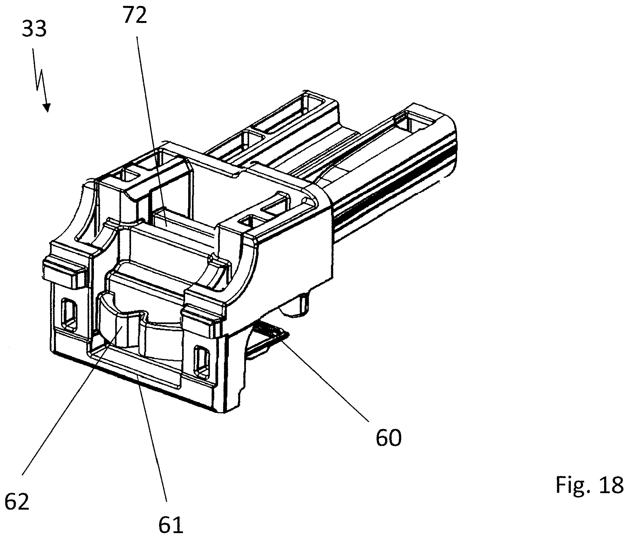

Wie Figur 18 zu entnehmen ist, weisen die Zugspriegelgleiter 33 neben der Aufnahme 72 für das betreffende Koppelelement 70 jeweils eine Anbindungslasche 60 für das Führungsband der betreffenden Rollobahn 18 bzw. 19 sowie an ihren unteren seitlichen Rändern jeweils eine Gleitschiene 61 auf, die es ermöglicht, dass die Zugspriegelgleiter 33 im regulären Betrieb der Rolloanordnung 15 beim Öffnen bzw. Aufwickeln der jeweiligen Rollobahn 18 bzw. 19 die Schnittstelle zwischen der jeweiligen Führungsschiene 25A, 25B, 26A bzw. 26B und dem jeweiligen Rolloführungselement 302 geräuschoptimiert überfahren kann. Damit ist gewährleistet, dass eine maximale Fläche des jeweiligen Dachabschnitts 11 bzw. 12 zur Durchsicht freigegeben werden kann. Zudem weisen die Zugspriegelgleiter 33 jeweils ein Federelement 62 auf, das sie jeweils mit Spannung in der jeweiligen Führungsschiene 25A, 25B, 26A bzw. 26B hält.

Die Montage der vorstehend beschriebenen Rolloanordnung 15 erfolgt in nachfolgend beschriebener Weise.

In einem ersten Montageschritt wird die Rolloanordnung 15 zusammengesetzt, das heißt die Lagerschale 24 wird mit den Rolloeinheiten 16 und 17 versehen, wobei die Lagerböcke 301 der Lagereinheiten 30 über die Fixierschrauben 303 mit der Lagerschale 24 verschraubt werden. Zudem werden die Fixierbleche 28A und 28B befestigt. Des Weiteren werden die Montageclips 50 in die Ausnehmungen 51 eingesteckt und die Zentrierstifte 57 mittels von unten eingreifender Schrauben verschraubt. Die so bereitgestellte Rolloanordnung 15 wird dann von unten an den sich in Dachquerrichtung erstreckenden Festdachabschnitt 14 herangefahren, wobei die Montageclips 50 in den Montageausnehmungen 54 des Dachrahmens 27 verrastet werden und die Zentrierstifte in korrespondierende Zentrierausnehmungen des Dachrahmens 27 eintauchen. Anschließend werden die Fixierschrauben 55 angezogen, wodurch die Lagerschale 24 gegen den Dachrahmen 27 gezogen wird. Gleichzeitig tauchen die Zungen 71 der Koppelelemente 70, die in eine Montagestellung gebracht sind, in die Aufnahmen 72 der Zugspriegelgleiter 33 ein. Zudem tauchen die Zentrierrippen 309 der Rolloführungselemente 302 der Lagereinheiten 30 in die Kanäle 34 der Führungsschienen 25A, 25B, 26A und 26B ein, wodurch eine Positionierung bzw. Zentrierung der Rolloführungselemente 302 in Dachquerrichtung erfolgt (vgl. Figuren 16a und b).

In einem nachfolgenden Montageschritt werden die Rolloführungselemente 302 in Führungsschienenlängsrichtung soweit gegenüber den Lagerböcken 301 und gegenüber der Lagerschale 24 verfahren, bis die Stirnflächen 311 an den Stirnseiten der Führungsschienen anschlagen und die Schraubenlöcher 318 die Fixierschrauben 36 umgreifen, beispielsweise durch manuelles Greifen der Rolloführungselemente 302 im Bereich der Griffmulden 319 oder durch Eingreifen eines Montagedorns in ein Loch 320 an der Unterseite des jeweiligen Rolloführungselements 302. Anschließend werden die Schrauben 36 angezogen.

Damit liegt eine exakte Positionierung der Rolloführungselemente 302 gegenüber dem Dachrahmen 27 vor. Die Rolloanordnung 15 kann nun in Betrieb genommen werden.

### Bezugszeichenliste

- 10: Fahrzeugdach
- 11: Dachabschnitt
- 12: Dachabschnitt
- 13: Festdachabschnitt
- 14: Festdachabschnitt
- 15: Rolloanordnung
- 16: Rolloeinheit
- 17: Rolloeinheit
- 18: Rollobahn
- 19: Rollobahn
- 20: Rollowickel
- 21: Rollowickel
- 22: Zugspriegel
- 23: Zugspriegel
- 24: Lagerschale
- 25A, B: Führungsschiene
- 26A, B: Führungsschiene
- 27: Dachrahmen
- 28A, B: Fixierblech
- 30: Lagereinheit
- 32: Lagerzapfen
- 33: Zugspriegelgleiter
- 34: Kanal
- 35: Kanal
- 35: Fixierschraube
- 39: Antriebskabel
- 50: Montageclip
- 51: Ausnehmung
- 52: Rastlasche
- 53: Rastlasche
- 54: Montageausnehmung
- 55: Fixierschraube
- 56: Gewinde
- 57: Zentrierstift
- 60: Anbindungslasche
- 61: Gleitschiene
- 62: Federelement
- 68: Antriebsmotoreinheit
- 70: Koppelelement
- 71: Zunge
- 72: Aufnahme
- 73: Flanke
- 74: Einführschräge
- 75: Einführschräge
- 241: Schlitz
- 301: Lagerbock
- 302: Rolloführungselement
- 303: Fixierlasche
- 304: Rastnase
- 305: Rastnase
- 306: Stift
- 307: Führungsabschnitt
- 308: Zentrierabschnitt
- 309: Zentrierrippe
- 310: Einführschräge
- 311: Stirnfläche
- 312: Zentrierzapfen
- 313: Führungsbahn
- 314: Steg
- 315: Nut
- 316: Rastnase
- 317: Fixierlasche
- 318: Schraubenloch
- 319: Griffmulde
- 320: Loch

## Patentansprüche

1. Fahrzeugdach, umfassend mindestens einen transparenten Dachabschnitt (11, 12), einen dachfesten Trägerabschnitt und eine Rolloanordnung (15) zur wahlweisen Abschattung oder zumindest teilweisen Freigabe des transparenten Dachabschnitts (11, 12), die mindestens eine Rolloeinheit (16, 17) aufweist, die eine Rollobahn (18, 19), die zu einem Rollowickel (20, 21) aufwickelbar ist, und bezogen auf eine vertikale Dachlängsmittelebene beidseits jeweils eine seitliche Lagereinheit (30) umfasst, wobei der Rollowickel (20, 21) zwischen den beiden seitlichen Lagereinheiten (30) angeordnet ist und die Rolloanordnung (15) eine Lagerschale (24) umfasst, auf der die mindestens eine Rolloeinheit (16, 17) über die seitlichen Lagereinheiten (30) befestigt ist und die von unten an dem mindestens einen Trägerabschnitt fixiert ist, **dadurch gekennzeichnet, dass** die Lagereinheiten (30) jeweils einen Lagerbock (301), der an der Lagerschale (24) fixiert ist, und ein Rolloführungselement (302) umfassen, das in einer Vormontagestellung gegenüber dem Lagerbock (301) verlagerbar ist und in einer Montagestellung an dem dachfesten Trägerabschnitt fixiert ist.

2. Fahrzeugdach nach Anspruch 1, **dadurch gekennzeichnet, dass** die Rolloführungselemente (302) jeweils in Ausziehrichtung der Rollobahn (18, 19) über einen Rand der Lagerschale (24) vorstehen.

3. Fahrzeugdach nach Anspruch 1 oder 2, **dadurch gekennzeichnet, dass** die Rolloführungselemente (302) jeweils ein Schraubenloch (318) aufweisen, das an einer in Ausziehrichtung der Rollobahn (18, 19) angeordneten Seite offen ist und über das das jeweilige Rolloführungselement (302) mit dem dachfesten Trägerabschnitt verschraubt ist.

4. Fahrzeugdach nach einem der Ansprüche 1 bis 3, **dadurch gekennzeichnet, dass** die Rolloführungselemente (302) jeweils an ihrer Unterseite eine Griffmulde (319) aufweisen.

5. Fahrzeugdach nach einem der Ansprüche 1 bis 4, **dadurch gekennzeichnet, dass** die Rolloführungselemente (302) jeweils eine Zentrierbahn (313) aufweisen, in dem ein seitliches Führungsband der Rollobahn (18, 19) geführt ist und die mit einem Kanal eines Führungsschienenprofils (25A, 25B, 26A, 26B) fluchtet, das Bestandteil des Trägerabschnitts ist.

6. Fahrzeugdach nach einem der Ansprüche 1 bis 5, **dadurch gekennzeichnet, dass** die Rolloführungselemente (302) jeweils eine Führungsbahn (34) für einen Zugspriegelgleiter (33) haben, die mit einem Führungskanal (35) eines Führungsschienenprofils (25A, 25B, 26A, 26B) fluchtet, das Bestandteil des Trägerabschnitts ist, wobei die Rolloführungselemente (302) vorzugsweise jeweils eine Rastnase (316) aufweisen, die den betreffenden Zugspriegelgleiter (33) in einem Vormontagezustand an dem jeweiligen Rolloführungselement (302) hält.

7. Fahrzeugdach nach einem der Ansprüche 1 bis 6, **dadurch gekennzeichnet, dass** die Rolloführungselemente (302) jeweils mit Spiel in mindestens zwei Raumrichtungen in dem jeweiligen Lagerbock (301) gelagert sind.

8. Fahrzeugdach nach einem der Ansprüche 1 bis 7, **dadurch gekennzeichnet, dass** die Rolloführungselemente (302) in einem Vormontagezustand mittels einer Rasteinrichtung (304, 305) in dem jeweiligen Lagerbock (301) gesichert sind.

9. Fahrzeugdach nach einem der Ansprüche 1 bis 8, **dadurch gekennzeichnet, dass** die Rolloführungselemente (302) jeweils einen Positioniervorsprung aufweisen, der von unten in eine korrespondierende Aufnahme des Trägerabschnitts eingreift und der insbesondere als Zentrierrippe (309) ausgebildet ist, die sich in Ausziehrichtung der Rollobahn (18, 19) erstreckt.

10. Fahrzeugdach nach einem der Ansprüche 1 bis 9, **dadurch gekennzeichnet, dass** die Rolloführungselemente (302) jeweils mindestens einen stirnseitigen Zentrierzapfen (312) umfassen, der in eine dachfeste Zentrierausnehmung eingreift, wobei die Zentrierausnehmung vorzugsweise von einem Führungsschienenprofil (25A, 25B, 26A, 26B) gebildet ist, an dem das betreffende Rolloführungselement (302) in einer Montagestellung mit einer Stirnfläche (311) anliegt.

11. Fahrzeugdach nach einem der Ansprüche 1 bis 10, **dadurch gekennzeichnet, dass** Zugspriegelgleiter (33) vorgesehen sind, die jeweils eine Aufnahme (72) für ein Koppelelement (70) eines jeweiligen Antriebskabels (39) aufweisen, das von einem Antriebsmotor angetrieben ist, wobei die Aufnahme (72) vorzugsweise nach oben offen ist und das Koppelelement (70) in Längsrichtung des betreffenden Führungsschienenprofils (25A, 25B, 26A, 26B) spielfrei aufnimmt, wobei die Aufnahmen (72) vorzugsweise jeweils Einführschrägen (74, 75) für das jeweilige Koppelelement (70) haben, und wobei die Koppelelemente (70) der Antriebskabel (39) vorzugsweise jeweils einen hakenförmigen Querschnitt haben und jeweils eine Zunge (71) umfassen, die parallel zu der vertikalen Dachlängsmittelebene ausgerichtet ist.

12. Fahrzeugdach nach einem der Ansprüche 1 bis 11, **dadurch gekennzeichnet, dass** die Lagerböcke (301) jeweils einen Lagerzapfen (32) für ein Wickelrohr umfassen.

13. Fahrzeugdach nach einem der Ansprüche 1 bis 12, **dadurch gekennzeichnet, dass** die Lagerschale (24) mit mindestens einem Montageclip (50) versehen ist, der sie in einer Vormontagestellung an dem Trägerabschnitt hält und der vorzugsweise einen rechteckigen Querschnitt hat, wobei der Montageclip (50) vorzugsweise in einer Ausnehmung (51) der Lagerschale (24) verrastet ist, und wobei der Montageclip (50) vorzugsweise in der Vormontagestellung in einer Montageausnehmung (54) des Trägerabschnitts mit Spiel in Dachhochrichtung von unten verrastet ist.

14. Fahrzeugdach nach einem der Ansprüche 1 bis 13, **dadurch gekennzeichnet, dass** der Trägerabschnitt von einem Rahmen eines Dachöffnungssystems gebildet ist.

15. Fahrzeugdach nach einem der Ansprüche 1 bis 14, **dadurch gekennzeichnet, dass** die Rolloanordnung (15) zwei Rolloeinheiten (16, 17) umfasst, die auf der Lagerschale (24) angeordnet sind.

## Claims

1. A vehicle roof, comprising at least one transparent roof section (11, 12), a roof-attached support section and a roller blind assembly (15) for selectively shading or clearing the transparent roof section (11, 12) at least partially, said roller blind assembly (15) including at least one roller blind unit (16, 17) which comprises a roller blind web (18, 19) which can be wound up to form a roller blind reel (20, 21) and one lateral bearing unit (30) on either side of a vertical longitudinal centre plane of the roof, said roller blind reel (20, 21) being disposed between the two lateral bearing units (30) and said roller blind assembly (15) comprising a bearing shell (24) on top of which the at least one roller blind unit (16, 17) is fastened via the lateral bearing units (30) and which is fixed to the at least one support section from below, **characterised in that** each of the bearing units (30) comprises a bearing pedestal (301) which is fixed to the bearing shell (24) and a roller blind guide element (302) which can be displaced as against the bearing pedestal (301) when in a pre-installation position and is fixed to the roof-attached support section when in an installation position.

2. The vehicle roof according to claim 1, **characterised in that** the roller blind guide elements (302) in each instance protrude beyond an edge of the bearing shell (24) in the direction in which the roller blind web (18, 19) is extended.

3. The vehicle roof according to claim 1 or 2, **characterised in that** each of the roller blind guide elements (302) includes a screw hole (318) which is open at a side disposed in the direction in which the roller blind web (18, 19) is extended and via which the respective roller blind guide element (302) is screwed to the roof-attached support section.

4. The vehicle roof according to any one of the claims 1 to 3, **characterised in that** each of the roller blind guide elements (302) includes a grasping recess (319) at its underside.

5. The vehicle roof according to any one of the claims 1 to 4, **characterised in that** each of the roller blind guide elements (302) includes a centering track (313) in which a lateral guide tape of the roller blind web (18, 19) is guided and which is aligned with a channel of a guide rail profile (25A, 25B, 26A, 26B) which is part of the support section.

6. The vehicle roof according to any one of the claims 1 to 5, **characterised in that** each of the roller blind guide elements (302) has a guide track (34) for a pull bar slider (33), said guide track (34) being aligned with a guide channel (35) of a guide rail profile (25A, 25B, 26A, 26B) which is part of the support section, each of the roller blind guide elements (302) preferably including a catch (316) which retains the respective pull bar slider (33) in a pre-installation state at the respective roller blind guide element (302).

7. The vehicle roof according to any one of the claims 1 to 6, **characterised in that** each of the roller blind guide elements (302) is mounted in the respective bearing pedestal (301) with play in at least two directions in space.

8. The vehicle roof according to any one of the claims 1 to 7, **characterised in that** the roller blind guide elements (302), in a pre-installation state, are secured in the respective bearing pedestal (301) with the aid of a catch means (304, 305).

9. The vehicle roof according to any one of the claims 1 to 8, **characterised in that** each of the roller blind guide elements (302) includes a positioning projection which engages into a corresponding holding fixture of the support section from below and which is in particular realised as a centering rib (309) which extends in the direction in which the roller blind web (18, 19) is extended.

10. The vehicle roof according to any one of the claims 1 to 9, **characterised in that** each of the roller blind guide elements (302) comprises at least one centering pin (312) disposed at the face side and engaging into a roof-attached centering clearance, the centering clearance preferably being formed by a guide rail profile (25A, 25B, 26A, 26B) with which a face side (311) of the respective roller blind guide element (302) is in contact when in an installation position.

11. The vehicle roof according to any one of the claims 1 to 10, **characterised in that** pull bar sliders (33) are provided each of which includes a holding fixture (72) for a coupling element (70) of a respective drive cable (39) which is driven by a drive motor, the holding fixture (72) preferably being open to the top and receiving the coupling element (70) without play in the longitudinal direction of the respective guide rail profile (25A, 25B, 26A, 26B), each of the holding fixtures (72) preferably having lead-in chamfers (74, 75) for the respective coupling element (70), and each of the coupling elements (70) of the drive cables (39) preferably having a clamp-shaped cross section and comprising a tongue (71) which is oriented so as to be parallel to the vertical longitudinal centre plane of the roof.

12. The vehicle roof according to any one of the claims 1 to 11, **characterised in that** each of the bearing pedestals (301) comprises a bearing pin (32) for a winding tube.

13. The vehicle roof according to any one of the claims 1 to 12, **characterised in that** the bearing shell (24) is provided with at least one installation clip (50) which retains said bearing shell at the support section in a pre-installation position and which preferably has a rectangular cross-section, the installation clip (50) preferably being locked in a clearance (51) of the bearing shell (24), and the installation clip (50), in the pre-installation position, preferably being locked in an installation clearance (54) of the support section from below with play in the vertical direction of the roof.

14. The vehicle roof according to any one of the claims 1 to 13, **characterised in that** the support section is formed by a frame of a roof opening system.

15. The vehicle roof according to any one of the claims 1 to 14, **characterised in that** the roller blind assembly (15) comprises two roller blind units (16, 17) which are disposed on the bearing shell (24).

## Revendications

1. Toit de véhicule, comprenant au moins une partie de toit transparente (11, 12), une partie de support fixé sur le toit et un ensemble de store (15) pour ombrer au choix ou dégager la partie de toit transparente (11, 12) au moins en partie, ledit ensemble de store (15) présentant au moins une unité de store (16, 17) qui comprend un store (18, 19), qui peut être enroulé pour former un rouleau de store (20, 21), et une unité de palier (30) latérale de chaque côté d'un plan médian longitudinal vertical du toit, ledit rouleau de store (20, 21) étant disposé entre les deux unités de palier (30) latérales et ledit ensemble de store (15) comprenant une coque de palier (24) au-dessus de laquelle l'au moins une unité de store (16, 17) est fixée par les unités de palier (30) latérales et qui est fixée sur l'au moins une partie de support d'en bas, **caractérisé en ce que** chacune des unités de palier (30) comprend une chaise de palier (301) qui est fixée sur la coque de palier (24) et un élément de guidage de store (302) qui peut être déplacé par rapport à la chaise de palier (301) dans une position de prémontage et est fixé sur la partie de support fixé sur le toit dans une position de montage.

2. Toit de véhicule selon la revendication 1, **caractérisé en ce que** chacun des éléments de guidage de store (302) saillit au-delà d'un bord de la coque de palier (24) dans la direction dans laquelle le store (18, 19) est déplié.

3. Toit de véhicule selon la revendication 1 ou 2, **caractérisé en ce que** chacun des éléments de guidage de store (302) présente un trou de vis (318) qui est ouvert d'un côté disposé dans la direction dans laquelle le store (18, 19) est déplié et par lequel l'élément de guidage de store (302) respectif est vissé à la partie de support fixé sur le toit.

4. Toit de véhicule selon l'une quelconque des revendications 1 à 3, **caractérisé en ce que** chacun des éléments de guidage de store (302) présente une poignée encastrée (319) sur sa face inférieure.

5. Toit de véhicule selon l'une quelconque des revendications 1 à 4, **caractérisé en ce que** chacun des éléments de guidage de store (302) présente une voie de centrage (313) dans laquelle une bande de guidage latérale du store (18, 19) est guidée et qui est alignée avec un canal d'un profilé d'un rail de guidage (25A, 25B, 26A, 26B) qui fait partie de la partie de support.

6. Toit de véhicule selon l'une quelconque des revendications 1 à 5, **caractérisé en ce que** chacun des éléments de guidage de store (302) a une voie de guidage (34) pour une glissière d'arceau tracteur (33), chaque voie de guidage (34) étant alignée avec un canal de guidage (35) d'un profilé d'un rail de guidage (25A, 25B, 26A, 26B) qui fait partie de la partie de support, chacun des éléments de guidage de store (302) présentant de préférence une éclisse de verrouillage (316) qui retient la glissière d'arceau tracteur (33) respective sur l'élément de guidage de store (302) respectif dans un état de prémontage.

7. Toit de véhicule selon l'une quelconque des revendications 1 à 6, **caractérisé en ce que** chacun des éléments de guidage de store (302) est monté dans la chaise de palier (301) respective avec jeu dans au moins deux directions spatiales.

8. Toit de véhicule selon l'une quelconque des revendications 1 à 7, **caractérisé en ce que** les éléments de guidage de store (302), dans un état de prémontage, sont fixés dans la chaise de palier (301) respective moyennant un moyen de verrouillage (304, 305).

9. Toit de véhicule selon l'une quelconque des revendications 1 à 8, **caractérisé en ce que** chacun des éléments de guidage de store (302) présente un épaulement de positionnement qui s'engage dans un logement correspondant de la partie de support d'en bas et qui est notamment réalisé comme renfort de centrage (309) qui s'étend dans la direction dans laquelle le store (18, 19) est déplié.

10. Toit de véhicule selon l'une quelconque des revendications 1 à 9, **caractérisé en ce que** chacun des éléments de guidage de store (302) comprend au moins un tenon de centrage (312) disposé sur la face frontale et s'engageant dans une cavité de centrage fixée sur le toit, la cavité de centrage étant formée de préférence par un profilé d'un rail de guidage (25A, 25B, 26A, 26B) avec lequel une face frontale (311) de l'élément de guidage de store (302) respectif est en contact dans une position de montage.

11. Toit de véhicule selon l'une quelconque des revendications 1 à 10, **caractérisé en ce que** des glissières d'arceau tracteur (33) sont prévues dont chacune présente un logement (72) pour un élément de couplage (70) d'un câble d'entraînement (39) respectif qui est entrainé par un moteur d'entraînement, ledit logement (72) de préférence étant ouvert vers le haut et logeant l'élément de couplage (70) sans jeu dans la direction longitudinale du profilé d'un rail de guidage (25A, 25B, 26A, 26B) respectif, chacun des logements (72) ayant de préférence des pentes d'entrée (74, 75) pour l'élément de couplage (70) respectif, et chacun des éléments de couplage (70) des câbles d'entraînement (39) ayant de préférence une section transversale unciforme et comprenant une langue (71) qui est orientée en parallèle par rapport au plan médian longitudinal vertical du toit.

12. Toit de véhicule selon l'une quelconque des revendications 1 à 11, **caractérisé en ce que** chacune des chaises de palier (301) comprend un tenon de palier (32) pour un tube d'enroulement.

13. Toit de véhicule selon l'une quelconque des revendications 1 à 12, **caractérisé en ce que** la coque de palier (24) est pourvue d'au moins une attache de montage (50) qui retient ladite coque de palier (24) sur la partie de support dans une position de prémontage et qui a de préférence une section transversale rectangulaire, ladite attache de montage (50) étant verrouillée de préférence dans une cavité (51) de la coque de palier (24), et ladite attache de montage (50), dans la position de prémontage, de préférence étant verrouillée dans une cavité de montage (54) de la partie de support d'en bas avec jeu dans la direction verticale du toit.

14. Toit de véhicule selon l'une quelconque des revendications 1 à 13, **caractérisé en ce que** la partie de support est formée par un cadre d'un système d'ouverture d'un toit.

15. Toit de véhicule selon l'une quelconque des revendications 1 à 14, **caractérisé en ce que** l'ensemble de store (15) comprend deux unités de store (16, 17) qui sont disposées sur la coque de palier (24).
